# EUROPÄISCHE PATENTSCHRIFT

(11) **EP 3 355 249 B1**
(45) Veröffentlichungstag und Bekanntmachung des Hinweises auf die Patenterteilung: **23.06.2021**
(21) Anmeldenummer: 17195592.5
(22) Anmeldetag: 10.10.2017
(51) Int. Cl.: G06Q 10/00

(54) **VERFAHREN ZUM ZUORDNEN EINES FAHRZEUGS ZU EINEM PARKPLATZ, DATENVERARBEITUNGSANLAGE UND FAHRZEUG**
METHOD FOR ALLOCATING A VEHICLE TO A PARKING SPACE, DATA PROCESSING SYSTEM AND VEHICLE
PROCÉDÉ D'ATTRIBUTION D'UN VÉHICULE À UN LIEU DE STATIONNEMENT, INSTALLATION DE TRAITEMENT DE DONNÉES ET VÉHICULE

(30) Priorität: 16.12.2016 DE 102016124604
(43) Veröffentlichungstag der Anmeldung: 01.08.2018
(73) Patentinhaber: Bayerische Motoren Werke Aktiengesellschaft, 80809 München (DE); Deutsche Telekom AG, 53113 Bonn (DE)
(72) Erfinder: Gehrsitz, Thomas, 81377 München (DE); Zimmermann, Sebastian, 80331 München (DE); Schnieders, Dominik, 52078 Aachen (DE)
(74) Vertreter: 2SPL Patentanwälte PartG mbB

(56) Entgegenhaltungen:
- WO-A1-98/49654
- DE-A1-102012 021 403
- DE-A1-102014 209 453
- US-A1- 2012 284 209
- US-A1- 2014 156 661
- US-A1- 2015 179 070
- US-A1- 2015 369 618

## Beschreibung

### Technisches Gebiet

Ausführungsbeispiele befassen sich mit der Erkennung parkender Fahrzeuge. Insbesondere befassen sich Ausführungsbeispiele mit einem Verfahren zum Zuordnen eines Fahrzeugs zu einem Parkplatz, einem Verfahren zum Zuordnen eines Fahrzeugs zu einer Infrastruktur, einer Datenverarbeitungsanlage und einem Fahrzeug.

### Hintergrund

Bei gebührenpflichtigen Parkmöglichkeiten muss für gewöhnlich ein Ticket an einem Automaten gelöst werden. Bei Parkbeginn ist dazu die geschätzte Parkdauer direkt zu begleichen. Das Ticket muss im Anschluss sichtbar hinter der Windschutzscheibe hinterlegt werden. Die Überwachung, ob abgestellte Fahrzeuge parkberechtigt sind, erfolgt manuell durch eine Person, die die hinterlegten Parktickets einzeln überprüfen muss. Dies ist sowohl für den Fahrzeugführer, der manuell das Parkticket lösen muss, als auch für den Anbieter der Parkmöglichkeit, der die hinterlegten Parktickets einzeln überprüfen muss, mit einigem Aufwand verbunden.

Druckschrift DE 10 2014 209 453 A1 betrifft ein Verfahren zur Suche nach einem Parkplatz. In einer Datenverarbeitungsstation sind Datensätze betreffen die Eigenschaften von Parkplätzen hinterlegt. Eine der Eigenschaften ist der Belegungszustand eines jeden der Parkplätze. Die Aktualisierung des Belegungszustands in der Datenverarbeitungsstation erfolgt jeweils ansprechend auf eine einzige Informationsquelle. Eine solche Informationsquelle kann jedoch fehlerbehaftet sein oder ausfallen. Entsprechend kann der Belegungszustand in der Datenverarbeitungsstation nur unzureichend aktualisiert werden.

Druckschrift DE 10 2012 021 403 A1 betrifft ein Verfahren zum Identifizieren eines von einer Sensoreinrichtung erfassten Fahrzeugs. Dabei erfolgt ein Vergleich von Informationen über das Fahrzeug, um ein Objekt im Videosignal einer Kamera als das Fahrzeug zu identifizieren, so dass anschließend das Videosignal der Kamera zur Unterstützung des Parkvorgangs in ausschließlich das Fahrzeug übertragen werden kann. In Druckschrift DE 10 2012 021 403 A1 wird nicht festgestellt, ob das Fahrzeug tatsächlich auf dem Parkplatz abgestellt wird.

Es besteht daher ein Bedürfnis, eine verbesserte Möglichkeit zum Erkennen parkender Fahrzeuge bereitzustellen.

### Zusammenfassung

Ausführungsbeispiele eines Verfahrens zum Zuordnen eines Fahrzeugs zu einem Parkplatz ermöglichen dies. Das Verfahren umfasst ein Empfangen von Bewegungsinformationen von dem Fahrzeug durch eine Datenverarbeitungsanlage. Die Bewegungsinformationen umfassen Informationen über eine Bewegung des Fahrzeugs. Ferner umfasst das Verfahren ein Empfangen von Messwerten zumindest eines Magnetfeldsensors durch die Datenverarbeitungsanlage. Der Magnetfeldsensor ist in einen Bodenbelag des Parkplatzes eingelassen oder auf dem Bodenbelag des Parkplatzes angeordnet. Die Messwerte geben absolute Werte oder relative Veränderungen des von dem Magnetfeldsensor gemessenen Erdmagnetfelds wieder. Das Verfahren umfasst weiterhin ein Vergleichen der Bewegungsinformationen mit den Messwerten durch die Datenverarbeitungsanlage. Zudem umfasst das Verfahren ein Feststellen, dass das Fahrzeug auf dem Parkplatz abgestellt ist, durch die Datenverarbeitungsanlage, wenn die Bewegungsinformationen anzeigen, dass sich das Fahrzeug über den Magnetfeldsensor bewegt hat und nun steht, und die Messwerte des Magnetfeldsensors eine für das Überfahren des Magnetfeldsensors charakteristische Änderung des gemessenen Erdmagnetfelds anzeigen.

Ferner betreffen Ausführungsbeispiele ein Programm mit einem Programmcode zum Durchführen des obigen Verfahrens, wenn der Programmcode auf einem Computer, einem Prozessor oder einer programmierbaren Hardwarekomponente ausgeführt wird.

Ausführungsbeispiele betreffen ferner eine Datenverarbeitungsanlage zum Zuordnen eines Fahrzeugs zu einem Parkplatz. Die Datenverarbeitungsanlage umfasst eine Empfangsschaltung, die eingerichtet ist, Bewegungsinformationen von dem Fahrzeug zu empfangen. Die Bewegungsinformationen umfassen Informationen über eine Bewegung des Fahrzeugs. Die Empfangsschaltung ist ferner eingerichtet, Messwerte zumindest eines Magnetfeldsensors zu empfangen. Der Magnetfeldsensor ist in einen Bodenbelag des Parkplatzes eingelassen oder auf dem Bodenbelag des Parkplatzes angeordnet. Die Messwerte geben absolute Werte oder relative Veränderungen des von dem Magnetfeldsensor gemessenen Erdmagnetfelds wieder. Weiterhin umfasst die Datenverarbeitungsanlage eine Auswerteschaltung, die eingerichtet ist die Bewegungsinformationen mit den Messwerten zu vergleichen. Die Auswerteschaltung ist ferner eingerichtet, festzustellen, dass das Fahrzeug auf dem Parkplatz abgestellt ist, wenn die Bewegungsinformationen anzeigen, dass sich das Fahrzeug über den Magnetfeldsensor bewegt hat und nun steht, und die Messwerte des Magnetfeldsensors eine für das Überfahren des Magnetfeldsensors charakteristische Änderung des gemessenen Erdmagnetfelds anzeigen.

Zudem betreffen Ausführungsbeispiele ein Fahrzeug. Das Fahrzeug umfasst eine Sendevorrichtung, die eingerichtet ist, Bewegungsinformationen des Fahrzeugs an eine Datenverarbeitungsanlage zu senden. Die Bewegungsinformationen umfassen Informationen über eine Bewegung des Fahrzeugs. Ferner umfasst das Fahrzeug eine Empfangsvorrichtung, die eingerichtet ist, eine erste Nachricht von der Datenverarbeitungsanlage zu empfangen. Die erste Nachricht umfasst Informationen über eine Identität eines Parkplatzes sowie Informationen über die Feststellung, dass das Fahrzeug auf dem Parkplatz abgestellt ist. Die Feststellung erfolgt, wenn die Bewegungsinformationen anzeigen, dass sich das Fahrzeug über einen Magnetfeldsensor, der in einen Bodenbelag des Parkplatzes eingelassen oder auf dem Bodenbelag des Parkplatzes angeordnet ist, bewegt hat und nun steht, und Messwerte des Magnetfeldsensors eine für das Überfahren des Magnetfeldsensors charakteristische Änderung des von dem Magnetfeldsensor gemessenen Erdmagnetfelds anzeigen.

### Figurenkurzbeschreibung

Ausführungsbeispiele werden nachfolgend bezugnehmend auf die beiliegenden Figuren näher erläutert. Es zeigen:
- Fig. 1: zeigt ein Ablaufdiagramm eines Ausführungsbeispiels des erfindungsgemäßen Verfahrens zum Zuordnen eines Fahrzeugs zu einem Parkplatz;
- Fig. 2: zeigt ein Ausführungsbeispiel der erfindungsgemäßen Datenverarbeitungsanlage;
- Fig. 3: zeigt ein Ausführungsbeispiel des erfindungsgemäßen Fahrzeugs; und
- Fig. 4: zeigt ein Ablaufdiagramm eines Ausführungsbeispiels des erfindungsgemäßen Verfahrens zum Zuordnen eines Fahrzeugs zu einer Infrastruktur, welche ein Parkplatz ist.

### Beschreibung

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können.

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer", "eine", "eines" und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", aufweist" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, solange dies hierin nicht ausdrücklich anders definiert ist.

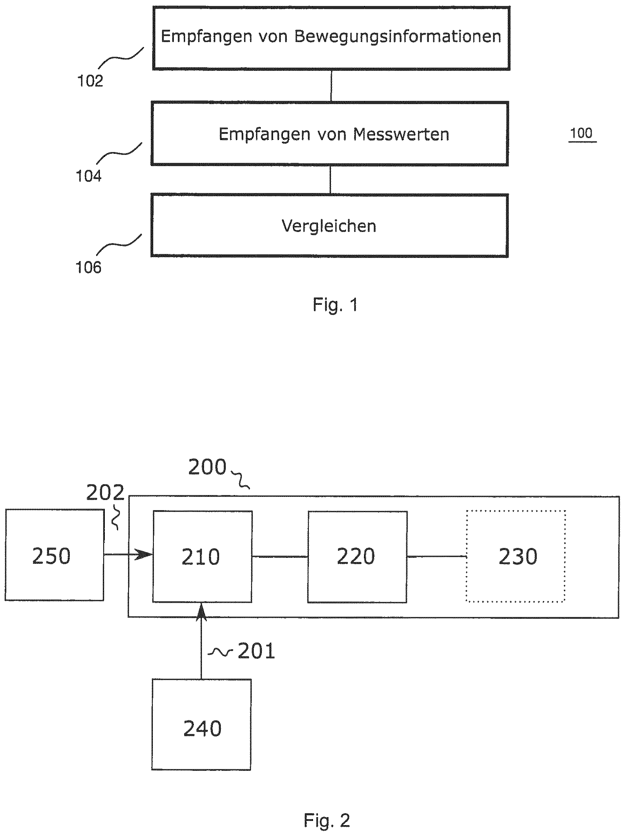

**Fig. 1** zeigt ein Verfahren 100 zum Zuordnen eines Fahrzeugs zu einem Parkplatz. Das Verfahren 100 umfasst ein Empfangen 102 von Bewegungsinformationen von dem Fahrzeug. Die Bewegungsinformationen umfassen Informationen über eine Bewegung des Fahrzeugs. Ferner umfasst das Verfahren 100 ein Empfangen 104 von Messwerten zumindest eines dem Parkplatz zugeordneten Sensors. Das Verfahren 100 umfasst weiterhin ein Vergleichen 106 der Bewegungsinformationen mit den Messwerten.

Das Verfahren 100 kann durch das Vergleichen 106 der Bewegungsinformationen mit den Messwerten eine automatische Erkennung eines auf dem Parkplatz abgestellten Fahrzeugs ermöglichen. Somit kann automatische erkannt werden, dass sich ein Fahrzeug auf dem Parkplatz befindet. Dies kann z.B. eine automatisierte Abrechnung der Parkplatzgebühren in Gang setzen, wodurch z.B. ein manuelles Lösen eines Parktickets am Automaten entfallen kann.

Bei dem Parkplatz kann es sich z.B. um einen Parkplatz in einer Tiefgarage, einen Parkplatz in einem Parkhaus oder einen Parkplatz im Freien handeln. Der Parkplatz ist ein einzelner Stellplatz bzw. Parkstand, der eingerichtet und dimensioniert ist, um darauf ein Fahrzeug abzustellen. Ein Fahrzeug ist ein mobiles Verkehrsmittel für den Transport von Personen oder Gütern. Bei einem Fahrzeug kann es sich daher sowohl um ein Personen- als auch um ein Nutzfahrzeug handeln. Zum Beispiel kann ein Fahrzeug ein Personenkraftwagen, ein Lastkraftwagen, ein Motorrad oder ein Traktor sein. Allgemein kann ein Fahrzeug als eine Vorrichtung aufgefasst werden, die einen Motor, ein Antriebsstrangsystem sowie Räder umfasst.

Die Bewegungsinformationen umfassen Informationen über eine Bewegung des Fahrzeugs. Die Bewegungsinformationen umfassen also Informationen, die eine Bewegung des Fahrzeugs charakterisieren. Beispielsweise können die Bewegungsinformationen Informationen über eine Identität des Fahrzeugs, eine Position des Fahrzeugs, eine Beschleunigung des Fahrzeugs und/oder eine Geschwindigkeit des Fahrzeugs umfassen. Auch können die Bewegungsinformationen z.B. Informationen über Abmessungen (z.B. Höhe, Breite und/oder Tiefe) des Fahrzeugs, eine Bauform (z.B. Kombi, Kleinwagen, SUV, Limousine) des Fahrzeugs und/oder Materialien des Fahrzeugs umfassen. Mit diesen weiteren Informationen kann berücksichtigt werden, dass verschiedene Fahrzeuge bzw. Fahrzeugtypen unterschiedliche Sensormesswerte bzw. Sensormuster erzeuge können. Ferner können die Bewegungsinformationen z.B. auch einen Zeitstempel umfassen, d.h. eine Zuordnung eines oder mehrerer bestimmter Zeitpunkte zu den sonstigen Informationen, welche von den Bewegungsinformationen umfasst sind.

Die Messwerte des zumindest einen dem Parkplatz zugeordneten Sensors geben absolute Werte oder relative Veränderungen einer von dem Sensor gemessenen (physikalischen) Größe wieder. Der Sensor kann z.B. innerhalb einer Grundfläche des Parkplatzes angeordnet sein oder sich außerhalb der Grundfläche des Parkplatzes befinden. Der Sensor kann beispielsweise in einen Bodenbelag des Parkplatzes eingelassen sein oder auf dem Bodenbelag des Parkplatzes angeordnet sein.

Die Messwerte des Sensors können im Weiteren mit einer Identität des Sensors verknüpft (versehen) sein. Auch können die Messwerte des Sensors mit einem Zeitstempel verknüpft (versehen) sein. Der Sensor ist ein Magnetfeldsensor.

Das Vergleichen 106 der Bewegungsinformationen mit den Messwerten erlaubt es, die Bewegungsinformationen mit den Messwerten zu korrelieren. Das Verfahren 100 umfasst in Feststellen, dass das Fahrzeug auf dem Parkplatz abgestellt ist, wenn die Messwerte gemäß einem vorgegebenen Kriterium den Bewegungsinformationen entsprechen. Das vorgegeben Kriterium ist, dass eine durch die Bewegungsinformationen angezeigte Änderung der Position des Fahrzeugs einer Änderung der von dem Sensor gemessenen Größe entspricht. Zeigen die Bewegungsinformationen an, dass sich ein Fahrzeug über einen dem Parkplatz zugeordneten Magnetfeldsensor bewegt hat und nun steht, und zeigen die Messwerte des Magnetfeldsensors eine für das Überfahren charakteristische Änderung des gemessenen Erdmagnetfelds an, wird festgestellt, dass das Fahrzeug in den Parkplatz eingefahren ist und auf diesem parkt.

Das Verfahren 100 kann dann ferner ein Senden einer ersten Nachricht an das Fahrzeug umfassen. Die erste Nachricht umfasst Informationen über eine Identität des Parkplatzes sowie die Feststellung, dass das Fahrzeug auf dem Parkplatz abgestellt ist. Die erste Nachricht kann durch das Fahrzeug verarbeitet werden, so dass dem Fahrzeug mitgeteilt werden kann, dass es sich z.B. auf einem kostenpflichtigen Parkplatz befindet. Im Fahrzeug kann nun z.B. die Ausführung einer Applikation, welche die Verwaltung des Parkvorgangs erlaubt, erfolgen. So kann mittels der Applikation z.B. eine gewünschten Parkdauer gewählt, ein gewünschtes Bezahlmodell gewählt oder die Darstellung der Konditionen für das Parken auf dem Parkplatz an einen Benutzer des Fahrzeugs angezeigt werden.

Das Verfahren 100 kann entsprechend ferner ein Empfangen einer zweiten Nachricht von dem Fahrzeug umfassen. Die zweite Nachricht umfasst Informationen über ein gewünschtes Parken des Fahrzeugs auf dem Parkplatz. Damit kann durch das Fahrzeug z.B. signalisiert werden, dass ein Benutzer in Kenntnis der Konditionen für das Parken auf dem Parkplatz das Fahrzeug auf dem Parkplatz parken möchte. Im Weiteren kann nun z.B. ein Gebührenzähler für die Parkdauer gestartet werden oder bei Wahl einer bestimmten Standzeit die Abrechnung der Gebühren erfolgen. Dies kann z.B. über die Identität des Fahrzeugs erfolgen, wenn das Fahrzeug für die Nutzung des Parkplatzes registriert ist und aus der Registrierung z.B. die Bankinformationen des Benutzers des Fahrzeugs bekannt sind.

Ferner kann das Verfahren 100 ein Empfangen von weiteren Bewegungsinformationen von dem Fahrzeug umfassen. Die weiteren Bewegungsinformationen werden dabei zu einem späteren Zeitpunkt als die Bewegungsinformationen, auf welchen die Feststellung, dass das Fahrzeug auf dem Parkplatz abgestellt ist, beruht, empfangen. Die weiteren Bewegungsinformationen umfassen Informationen über eine erneute Bewegung des Fahrzeugs. Die weiteren Bewegungsinformationen zeigen somit an, dass sich das Fahrzeug nach einem Stillstand auf dem Parkplatz wieder in Bewegung gesetzt hat. Dies kann ein Indikator für eine Beendigung des Parkvorgangs sein. Das Verfahren 100 kann daher weiterhin ein Feststellen, dass das Parken des Fahrzeugs auf dem Parkplatz beendet ist, basierend auf den weiteren Bewegungsinformationen umfassen. In Folge des Feststellens, dass das Parken des Fahrzeugs auf dem Parkplatz beendet ist, kann z.B. eine Abrechnung der über den Gebührenzähler ermittelten Gebühren erfolgen. Ebenso können die weiteren Bewegungsinformationen für die Verifikation der Zuordnung des Fahrzeugs zu dem Parkplatz genutzt werden. Beispielsweise kann das Verfahren 100 dazu ein Vergleichen der weiteren Bewegungsinformationen mit weiteren Messwerten des Sensors umfassen. Wenn die weiteren Messwerte des Sensors gemäß dem vorgegebenen Kriterium den weiteren Bewegungsinformationen entsprechen, kann das Verfahren 100 z.B. ein Feststellen, dass die Zuordnung des Fahrzeugs zu dem Parkplatz korrekt war, umfassen. Die ursprüngliche (erste) Zuordnung des Fahrzeugs zu dem Parkplatz kann somit plausibilisiert werden.

Wurde z.B. eine feste Parkdauer gewählt, kann das Verfahren 100 ein Senden einer dritten Nachricht an eine Kommunikationsvorrichtung (z.B. Mobiltelefon, Smartphone, Tablet-Computer) eines Benutzers des Fahrzeugs umfassen. Die dritte Nachricht umfasst dabei Informationen über ein bevorstehendes Ablaufen der gewählten Parkdauer (z.B. Ablaufen der Parkdauer in 1, 5, 10, 15 oder 20 Minuten). Derart kann der Benutzer des Fahrzeugs über das bevorstehende Ende der Parkdauer informiert werden. Ein (kostenpflichtiges) Überziehen der Parkdauer kann somit vermieden werden.

Auch kann das Verfahren 100 weiterhin ein Feststellen, dass das Fahrzeug unberechtigt auf dem Parkplatz abgestellt ist, umfassen. Dies kann z.B. festgestellt werden, wenn bereits festgestellt wurde, dass das Fahrzeug auf dem Parkplatz abgestellt ist, jedoch keine zweite Nachricht, die ein gewünschtes Parken des Fahrzeugs auf dem Parkplatz anzeigt, von dem Fahrzeug empfangen wird. Beispielsweise kann gar keine zweite Nachricht von dem Fahrzeug empfangen werden oder die zweite Nachricht kann anzeigen, dass kein Parken des Fahrzeugs auf dem Parkplatz gewünscht ist. Trotz des Parkens auf dem Parkplatz kann es daher sein, dass eine Gebührenabrechnung für das Parken nicht gestartet wird (unterbleibt) aufgrund des nicht in der zweiten Nachricht angezeigten Parkwunsches. Das Fahrzeug parkt somit unberechtigt auf dem Parkplatz. Ebenso kann über die in den Bewegungsinformationen enthaltene Identität des Fahrzeugs z.B. festgestellt werden, dass das Fahrzeug auf einem Parkplatz abgestellt ist, der exklusiv für ein bestimmtes Fahrzeug oder eine bestimmt Gruppe von Fahrzeugen ist. So kann z.B. festgestellt werden, dass ein Fahrzeug eines Dritten in einer Tiefgarage auf einem an eine weitere Person vermieteten Parkplatz abgestellt ist. Das Fahrzeug parkt somit unberechtigt auf dem Parkplatz. Das Verfahren 100 kann daher ferner ein Senden einer vierten Nachricht an eine Kommunikationsvorrichtung eines Verantwortlichen für den Parkplatz (z.B. Mieter oder Eigentümer des Parkplatzes, Sicherheitsdienst, Abschleppunternehmen, Überwachungsbehörde) umfassen. Die dritte Nachricht umfasst dabei Informationen über den Parkplatz sowie das unberechtigte Abstellen des Fahrzeugs auf dem Parkplatz. Derart kann der Verantwortliche geeignete Maßnahmen hinsichtlich des unberechtigten Abstellens des Fahrzeugs auf dem Parkplatz ergreifen. Beispielsweise kann ein Abschleppen des Fahrzeugs oder die Verhängung eines Bußgelds veranlasst werden.

In einigen Ausführungsbeispielen kann dem Parkplatz auch mehr als ein Magnetfeldsensor zugeordnet sein. So kann dem Parkplatz z.B. eine Mehrzahl gleicher oder verschiedener Sensoren zugeordnet sein. Das heißt, dem Parkplatz können mehrere Sensoren zugeordnet sein, die alle dieselbe (physikalische) Größe messen oder verschiedene (physikalische) Größen messen. Das Verfahren 100 kann daher ferner ein Empfangen von Messwerten eines weiteren dem Parkplatz zugeordneten Sensors umfassen. Weiterhin kann das Verfahren 100 ein Vergleichen der Bewegungsinformationen mit den Messwerten des weiteren dem Parkplatz zugeordneten Sensors umfassen. Entsprechend kann das Feststellen, dass das Fahrzeug auf dem Parkplatz abgestellt ist, darauf basieren dass die Messwerte zumindest eines oder beider Sensoren gemäß einem oder mehreren vorgegebenen Kriterien den Bewegungsinformationen entsprechen. Es versteht sich von selbst, dass allgemein die Bewegungsinformationen des Fahrzeugs mit Messwerten einer Mehrzahl an dem Parkplatz zugeordneten Sensoren verglichen werden können. Ebenso kann das Feststellen, dass das Fahrzeug auf dem Parkplatz abgestellt ist, darauf basieren, dass die Messwerte eines oder mehrerer der Mehrzahl an Sensoren den Bewegungsinformationen des Fahrzeugs gemäß eines oder mehrerer vorgegebener Kriterien entsprechen. Derart kann eine Vergleichsredundanz ermöglicht werden, die eine Genauigkeit der Zuordnung des Fahrzeugs zu einem Parkplatz erhöhen kann.

In einigen Ausführungsbeispielen können die Messwerte des zumindest einen dem Parkplatz zugeordneten Sensors über ein Niedrigenergieweitverkehmetzwerk (engl. Low Power Wide Area Network, LPWAN bzw. LPN) übertragen werden. Beispielsweise können die Messwerte gemäß dem LTE-MTC Standard des 3rd Generation Partnership Project, dem NB-IoT Standard des 3rd Generation Partnership Project, dem LoRA Standard der LoRa Alliance oder dem SIGFOX Standard der Firma SIGFOX durch den Sensor ausgesendet werden. Dabei wird jeweils auf die zum Anmeldetag geltende Version des Standards Bezug genommen. Derart können die Messwerte des Sensors bei geringem Energieverbrauch über große Reichweiten übertragen werden. Insbesondere, wenn der Sensor über keine stationäre Energieversorgung verfügt (z.B. batteriebetrieben ist), kann die Datenübertragung über ein LPWAN eine lange Einsatzbereitschaft des Sensors ermöglichen. Der Betrieb des Sensors kann dadurch z.B. wartungsarm sein, wodurch Betriebskosten niedrig sein können.

Das Verfahren 100 kann beispielsweise auf einer Datenverarbeitungsanlage (Back-End) wie einem Server, einem Rechenzentrum oder einer Computer-Cloud ablaufen. Die Daten von dem Fahrzeug können z.B. über ein Mobilfunknetz (d.h. ein zellulares Netzwerk) oder eine sonstige Funktechnologie (z.B. drahtloses lokales Netzwerk) empfangen werden.

Gemäß einigen Ausführungsbeispielen können z.B. Parksensoren mit zusätzlichem Kommunikationsmodul (z.B. für ein LPWAN, wie etwa NB-IoT) am Straßenrand verbaut werden. Mit Hilfe der Module können Fahrzeuge direkt erkannt werden. Durch die Beobachtung z.B. des Parkvorgangs durch die Sensoren kann erkannt werden, wo genau das Fahrzeug abgestellt ist. Weiterhin ist ein Abgleich des Bewegungsprofils beim Parkvorgang zwischen Parksensoren und Fahrzeug möglich, um die Genauigkeit der Lokalisierung zu erhöhen. Wird das Fahrzeug abgestellt, werden dem Fahrer z.B. die Abrechnungsdetails (z.B. Kosten pro Minute, Höchstbetrag je Tag etc.) angezeigt. Mit einer Bestätigung des Parkvorgangs (,jetzt starten") beginnt beispielsweise die (z.B. minutengenaue) Abrechnung. Setzt sich das Fahrzeug in Bewegung, kann der Parkvorgang automatisch wieder beendet werden. Alternativ zur minutengenauen Abrechnung kann auch die Wahl der Parkdauer im Fahrzeug bei Beginn des Parkvorgangs möglich sein. In diesem Fall kann dem Fahrer eine Erinnerung an das bevorstehende Ende der gewählten Parkdauer (beispielsweise 10 Minuten vor Ablauf) als Nachricht auf das Smartphone gesendet werden.

Um die Anonymität sicherzustellen, kann beispielsweise ein Hashwert über das Nummernschild sowie die Startzeit/Parkposition mit begrenzter Gültigkeit für die Abrechnung dienen.

Ausführungsbeispiele können somit die effiziente Identifizierung von parkenden Fahrzeugen durch den Parksensor und das eineindeutige Koppeln von Fahrzeug und Parksensor ermöglichen.

Hat beispielsweise ein Kunde das automatische Bezahlen gebucht, kann sich in der Nähe des Parkplatz ein System für die automatische Identifizierung des Fahrzeugs für den Parkplatz aktivieren (dies kann z.B. bei einer Wegführung zum nächsten freien Parkplatz über die Navigation erfolgen; freie Parkplätze können z.B. mittels LPWAN, wie etwa NB-IoT, Parksensoren erfasst werden).

Beim Einparkvorgang können kontinuierlich Fahrzeug-Bewegungsdaten FB (t) mit z.B. Position, Geschwindigkeit, Beschleunigung, Fahrzeug-Identifizierungsnummer (engl. vehicle identification number, VIN) und Zeitstempel an ein Back-End übertragen werden. Beim Überfahren der NB-IoT Parksensoren können die Parksensoren die Änderungen der Sensorwerte (z.B. Erdmagnetfeld) über die Zeit übermitteln. Die Sensormesswerte PS(t) können dabei z.B. die Parameter Erdmagnetfeldänderung sowie Parksensoridentität und Zeitstempel umfassen.

Im Backend kann ein Matching zwischen den übertragenen Messwerten z.B. aller Parksensoren aus dem in Frage kommenden Umkreis des Fahrzeugs mit der Bewegungscharakteristik des Fahrzeugs stattfinden. Die Änderung des Erdmagnetfeldes durch die Bewegung eines darüber fahrenden Fahrzeugs wird charakteristisch mit Position und Geschwindigkeit des Fahrzeugs verändert. Diese Veränderung kann mit den Messwerten erfasst werden. Dadurch kann über die Zeit des Parkvorgangs ein eindeutiger Match zwischen allen in Frage kommenden Parksensoren (z.B. Umkreis Fahrzeug, zeitgleich überfahrende Parksensoren) und dem Fahrzeug hergestellt werden (z.B. Kopplung der Identität des Fahrzeugs mit der Identität des/der belegten Parksensoren). So kann mit sehr hoher Wahrscheinlichkeit z.B. festgestellt werden, auf welchem Parksensor(en) das Fahrzeug parkt. Damit kann z.B. eine semi-automatische Abrechnung ermöglicht werden.

Über die Identität des belegten Parksensors kann beispielsweise die Parkdauer gestartet und überwacht werden. Das Back-End sendet z.B. das Matching ans Fahrzeug und im Fahrzeug wird nun automatisch in die Parkapplikation gewechselt. In der Parkapplikation kann der Kunde gefragt werden, ob er Parken und Bezahlen will. Das Bezahlen kann im Voraus passieren oder es kann eine automatische Abrechnung nach Parkdauer erfolgen. Nach Bestätigung des Parkens kann diese Bestätigung ans Back-End geschickt werden und der Parkvorgang mit Bezahlung läuft. Bei Ende des Parkvorgangs kann beispielsweise eine Abrechnung im Back-End mit hinterlegten Daten des Kunden durchgeführt und ihm eine Bestätigung (z.B. Quittung) zugeschickt werden.

Auch können im Back-End Maßnahmen bei unberechtigtem Parken ergriffen werden (z.B. Wegführung für eine Politesse zum Falschparker).

Neben den oben genannten Erdmagnetfeldsensoren können auch weitere Parksensoren (z.B. Ultraschall) berücksichtigt werden.

In **Fig. 2** ist eine Datenverarbeitungsanlage 200 zum Zuordnen eines Fahrzeugs 240 zu einem Parkplatz gezeigt. Die Datenverarbeitungsanlage 200 umfasst eine Empfangsschaltung 210, die eingerichtet ist, Bewegungsinformationen 201 von dem Fahrzeug 240 zu empfangen. Die Bewegungsinformationen 201 umfassen Informationen über eine Bewegung des Fahrzeugs 240. Die Empfangsschaltung 210 ist ferner eingerichtet, Messwerte 202 zumindest eines dem Parkplatz zugeordneten Sensors 250 zu empfangen. Weiterhin umfasst die Datenverarbeitungsanlage 200 eine Auswerteschaltung 220, die eingerichtet ist, die Bewegungsinformationen 201 mit den Messwerten 202 zu vergleichen.

Die Datenverarbeitungsanlage 200 kann durch den Vergleich der Bewegungsinformationen 201 mit den Messwerten 202 erkennen, ob das Fahrzeug 240 auf dem Parkplatz abgestellt ist oder nicht. Dies kann z.B. eine automatisierte Abrechnung der Parkplatzgebühren in Gang setzen, wodurch z.B. ein manuelles Lösen eines Parktickets am Automaten entfallen kann.

Bei der Empfangsschaltung 210 handelt es sich um eine Schaltung, die eingerichtet ist, z.B. über ein Mobilfunknetz oder ein sonstiges Funknetzwerk Daten von dem Fahrzeug 240 und dem zumindest einen Sensor 250 zu empfangen. Beispielsweise kann die Empfangsschaltung 210 dazu einen Empfänger oder einen Sendeempfänger sowie entsprechende Prozessorschaltungen für das Basisbandprozessieren der empfangenen Daten umfassen.

Die Auswerteschaltung 220 kann z.B. einen oder mehrere Prozessoren bzw. einen oder mehrere Prozessorkerne, einen anwendungsspezifischen integrierten Schaltkreis (engl. ASIC = Application-Specific Integrated Circuit), einen integrierten Schaltkreis (engl. IC = Integrated Circuit), ein Ein-Chip-System (engl. SoC = System on a Chip), ein programmierbares Logikelement oder ein feldprogrammierbares Gatterarray mit einem Mikroprozessor (engl. FPGA = Field Programmable Gate Array) aufweisen, auf dem Software für den Vergleich der Bewegungsinformationen 201 mit den Messwerten 202 abläuft. Ferner kann die Auswerteschaltung 220 einen oder mehrere Speicher aufweisen, in denen z.B. die Software für den Vergleich der Bewegungsinformationen 201 mit den Messwerten 202 oder sonstige Daten gespeichert sein können.

Die Auswerteschaltung 220 ist ferner eingerichtet um festzustellen, dass das Fahrzeug 240 auf dem Parkplatz abgestellt ist, wenn die Messwerte 202 gemäß einem vorgegebenen Kriterium den Bewegungsinformationen 201 entsprechen. Das vorgegeben Kriterium ist, dass eine durch die Bewegungsinformationen 201 angezeigte Änderung der Position des Fahrzeugs 240 einer Änderung der von dem Sensor 250 gemessenen Größe entspricht.

In einigen Ausführungsbeispielen kann die Empfangsschaltung 210 weiterhin eingerichtet sein, Messwerte eines weiteren dem Parkplatz zugeordneten Sensors (nicht gezeigt) zu empfangen. Die Auswerteschaltung 220 kann dann ferner eingerichtet ist, die Bewegungsinformationen 201 mit den Messwerten des weiteren dem Parkplatz zugeordneten Sensors zu vergleichen. Auch kann die Auswerteschaltung ferner eingerichtet sein, festzustellen, dass das Fahrzeug 240 auf dem Parkplatz abgestellt ist, basierend darauf, dass die Messwerte zumindest eines oder beider Sensoren gemäß einem oder mehreren vorgegebenen Kriterien den Bewegungsinformationen 201 entsprechen. Es versteht sich von selbst, dass allgemein die Bewegungsinformationen 201 des Fahrzeugs 240 mit Messwerten einer Mehrzahl an dem Parkplatz zugeordneten Sensoren durch die Auswerteschaltung 220 verglichen werden können. Ebenso kann das Feststellen, dass das Fahrzeug 240 auf dem Parkplatz abgestellt ist, darauf basieren, dass die Messwerte eines oder mehrerer der Mehrzahl an Sensoren den Bewegungsinformationen 201 des Fahrzeugs 240 gemäß eines oder mehrerer vorgegebener Kriterien entsprechen. Derart kann eine Vergleichsredundanz ermöglicht werden, die eine Genauigkeit der Zuordnung des Fahrzeugs 240 zu einem Parkplatz erhöhen kann.

Die Datenverarbeitungsanlage 200 kann weiterhin eine Sendeschaltung 230 umfassen, die eingerichtet ist, eine erste Nachricht an das Fahrzeug 240 zu senden. Die erste Nachricht umfasst Informationen über eine Identität des Parkplatzes sowie Informationen über die Feststellung, dass das Fahrzeug auf dem Parkplatz abgestellt ist. Die Sendeschaltung 230 kann dazu einen Sender oder einen Sendeempfänger umfassen, um über ein Mobilfunknetz oder eine sonstige Funktechnologie mit den Fahrzeugen zu kommunizieren. Die erste Nachricht kann durch das Fahrzeug 240 verarbeitet werden, so dass dem Fahrzeug 240 mitgeteilt werden kann, dass es sich z.B. auf einem kostenpflichtigen Parkplatz befindet. Im Fahrzeug 240 kann dann z.B. die Ausführung einer Applikation zur Verwaltung des Parkvorgangs gestartet werden.

Die Empfangsschaltung 210 kann ferner eingerichtet sein, eine zweite Nachricht von dem Fahrzeug 240 zu empfangen. Die zweite Nachricht umfasst Informationen über ein gewünschtes Parken des Fahrzeugs 240 auf dem Parkplatz. Damit kann durch das Fahrzeug 240 z.B. signalisiert werden, dass ein Benutzer in Kenntnis der Konditionen für das Parken auf dem Parkplatz das Fahrzeug 240 auf dem Parkplatz parken möchte. Im Weiteren kann nun z.B. ein Gebührenzähler für die Parkdauer gestartet werden oder bei Wahl einer bestimmten Standzeit die Abrechnung der Gebühren erfolgen.

Auch kann die Empfangsschaltung 210 ferner eingerichtet sein, weitere Bewegungsinformationen von dem Fahrzeug 240 zu empfangen. Die weiteren Bewegungsinformationen umfassen Informationen über eine erneute Bewegung des Fahrzeugs. Die Auswerteschaltung 220 kann dabei ferner eingerichtet sein, basierend auf den weiteren Bewegungsinformationen festzustellen, dass das Parken des Fahrzeugs 240 auf dem Parkplatz beendet ist. Die weiteren Bewegungsinformationen werden zu einem späteren Zeitpunkt als die Bewegungsinformationen 201, auf welchen die Feststellung, dass das Fahrzeug 240 auf dem Parkplatz abgestellt ist, beruht, empfangen. Die weiteren Bewegungsinformationen zeigen somit an, dass sich das Fahrzeug 240 nach einem Stillstand auf dem Parkplatz wieder in Bewegung gesetzt hat. Dies kann ein Indikator für eine Beendigung des Parkvorgangs sein.

Die Sendeschaltung 230 kann weiterhin eingerichtet sein, eine dritte Nachricht an eine Kommunikationsvorrichtung eines Benutzers des Fahrzeugs 240 zu senden. Die dritte Nachricht umfasst Informationen über ein bevorstehendes Ablaufen der gewählten Parkdauer (z.B. Ablaufen der Parkdauer in 1, 5, 10, 15 oder 20 Minuten). Wurde eine feste Parkdauer gewählt, kann der Benutzer des Fahrzeugs über das bevorstehende Ende der Parkdauer informiert werden. Ein (kostenpflichtiges) Überziehen der Parkdauer kann somit vermieden werden.

Die Auswerteschaltung 220 kann auch eingerichtet sein, festzustellen, dass das Fahrzeug 240 unberechtigt auf dem Parkplatz abgestellt ist. Die Feststellung, dass das Fahrzeug 240 unberechtigt auf dem Parkplatz abgestellt ist, kann die Auswerteschaltung z.B. gemäß den im Zusammenhand mit Verfahren 100 beschriebenen Aspekten treffen. Die Sendeschaltung 230 kann dabei eingerichtet ist, eine vierte Nachricht an eine Kommunikationsvorrichtung eines Verantwortlichen für den Parkplatz zu senden. Die dritte Nachricht umfasst Informationen über den Parkplatz sowie das unberechtigte Abstellen des Fahrzeugs 240 auf dem Parkplatz. Derart kann der Verantwortliche geeignete Maßnahmen hinsichtlich des unberechtigten Abstellens des Fahrzeugs 240 auf dem Parkplatz ergreifen. Beispielsweise kann ein Abschleppen des Fahrzeugs 240 oder die Verhängung eines Bußgelds veranlasst werden.

In einigen Ausführungsbeispielen kann die Datenverarbeitungsanlage 200 ausgebildet sein, mit dem zumindest einen Sensor 250 und/oder dem Fahrzeug 240 über eine Mobilfunknetz oder eine sonstige Funktechnologie (z.B. drahtloses lokales Netzwerk) zu kommunizieren. Die Kommunikation kann z.B. über ein LPWAN erfolgen.

Die Datenverarbeitungsanlage 200 als auch ihre einzelnen Bestandteile (d.h. die Empfangsschaltung 210, die Auswerteschaltung 220 und optional die Sendeschaltung 230) können in einigen Ausführungsbeispielen ferner eingerichtet sein, einen oder mehrere Verfahrensschritte, die vorangehend in Zusammenhang mit Verfahren 100 beschrieben sind, auszuführen.

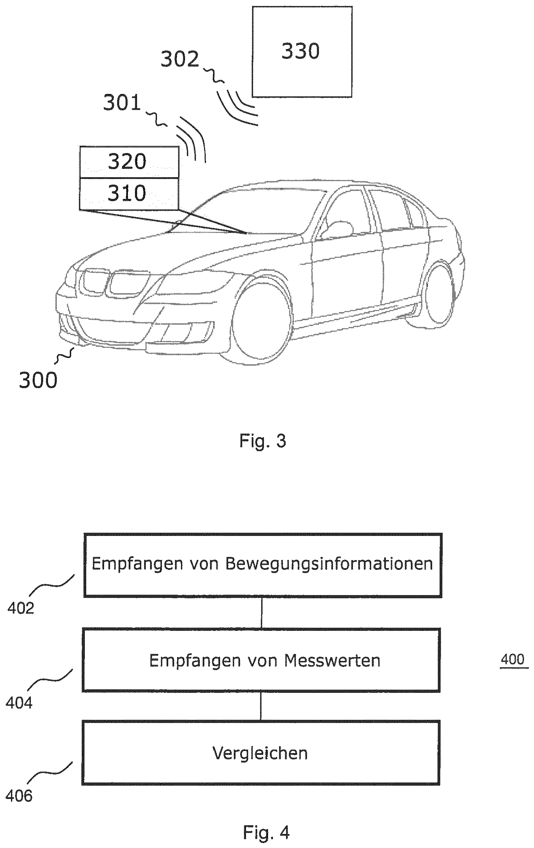

**Fig. 3** zeigt im Weiteren noch ein Fahrzeug 300. Das Fahrzeug 300 umfasst eine Sendevorrichtung 310, die eingerichtet ist, Bewegungsinformationen 301 des Fahrzeugs 300 an eine Datenverarbeitungsanlage 330 zu senden. Die Bewegungsinformationen 301 umfassen Informationen über eine Bewegung des Fahrzeugs 300. Ferner umfasst das Fahrzeug 300 eine Empfangsvorrichtung 320, die eingerichtet ist, eine erste Nachricht 302 von der Datenverarbeitungsanlage 330 zu empfangen. Die erste Nachricht 302 umfasst Informationen über eine Identität eines Parkplatzes sowie Informationen über die Feststellung, dass das Fahrzeug 300 auf dem Parkplatz abgestellt ist. Die Feststellung basiert dabei auf einem Vergleich der Bewegungsinformationen 301 mit Messwerten zumindest eines dem Parkplatz zugeordneten Sensors.

Durch den Vergleich der Bewegungsinformationen 301 mit den Messwerten kann automatisch erkannt werden, ob das Fahrzeug 300 auf dem Parkplatz abgestellt ist oder nicht. Dies kann z.B. eine automatisierte Abrechnung der Parkplatzgebühren in Gang setzen, wodurch z.B. ein manuelles Lösen eines Parktickets am Automaten entfallen kann.

Bei der Empfangsschaltung 320 handelt es sich um eine Schaltung, die eingerichtet ist, z.B. über ein Mobilfunknetz oder ein sonstiges Funknetzwerk Daten von der Datenverarbeitungsanlage 330 zu empfangen. Beispielsweise kann die Empfangsschaltung 320 dazu einen Empfänger oder einen Sendeempfänger sowie entsprechende Prozessorschaltungen für das Basisbandprozessieren der empfangenen Daten umfassen.

Die Sendeschaltung 310 kann beispielsweise einen Sender oder einen Sendeempfänger umfassen, um über ein Mobilfunknetz oder eine sonstige Funktechnologie mit der Datenverarbeitungsanlage 330 zu kommunizieren.

Die Bewegungsinformationen 301 umfassen Informationen, die eine Bewegung des Fahrzeugs 300 charakterisieren. Beispielsweise können die Bewegungsinformationen 301 Informationen über eine Identität des Fahrzeugs 300, eine Position des Fahrzeugs 300 und/oder eine Geschwindigkeit des Fahrzeugs 300 umfassen. Auch können die Bewegungsinformationen 301 z.B. Informationen über eine Beschleunigung des Fahrzeugs 300 umfassen. Ferner können die Bewegungsinformationen 301 z.B. auch einen Zeitstempel umfassen, d.h. eine Zuordnung eines oder mehrerer bestimmter Zeitpunkte zu den sonstigen Informationen, welche von den Bewegungsinformationen 301 umfasst sind.

Das Fahrzeug kann zudem eine Anzeigevorrichtung (nicht gezeigt) umfassen, die eingerichtet ist, nach Empfang der ersten Nachricht eine Anfrage an einen Benutzer des Fahrzeugs auszugeben. Die Anfrage umfasst eine Aufforderung, ein gewünschtes Parken des Fahrzeugs auf dem Parkplatz anzugeben. Bei der Anzeigevorrichtung kann es sich z.B. um eine Anzeige eines Infotainmentsystems des Fahrzeugs 300 oder eine sonstige bereits im Fahrzeug 300 vorhandene Anzeige (z.B. Kombiinstrument, Head-Up-Display) handeln. Die Aufforderung kann z.B. als Frage auf der Anzeigevorrichtung ausgegeben werden (evtl. zusammen mit weiteren Informationen über die Konditionen des Parkens auf dem Parkplatz) und dem Benutzer können mehrere Antwort- bzw. Auswahlmöglichkeiten (Parken oder nicht Parken, Art der Abrechnung) angezeigt werden. Die Sendevorrichtung 310 kann dabei ferner eingerichtet sein, eine zweite Nachricht an die Datenverarbeitungsanlage 330 zu senden. Die zweite Nachricht umfasst Informationen über das gewünschte Parken des Fahrzeugs auf dem Parkplatz. Damit kann das Fahrzeug 300 z.B. signalisieren, dass ein Benutzer in Kenntnis der Konditionen für das Parken auf dem Parkplatz das Fahrzeug 300 auf dem Parkplatz parken möchte. Im Weiteren kann nun z.B. in der Datenverarbeitungsanlage 330 ein Gebührenzähler für die Parkdauer gestartet werden oder bei Wahl einer bestimmten Standzeit die Abrechnung der Gebühren erfolgen.

Bei einer erneuten Bewegung des Fahrzeugs 300 kann die Sendevorrichtung 320 ferner eingerichtet sein, weitere Bewegungsinformationen an die Datenverarbeitungsanlage 330 zu senden. Die weiteren Bewegungsinformationen umfassen Informationen über die erneute Bewegung des Fahrzeugs 300. Die weiteren Bewegungsinformationen werden zu einem späteren Zeitpunkt als die Bewegungsinformationen 301, auf welchen die Feststellung, dass das Fahrzeug 300 auf dem Parkplatz abgestellt ist, beruht, empfangen. Die weiteren Bewegungsinformationen zeigen somit an, dass sich das Fahrzeug 300 nach einem Stillstand auf dem Parkplatz wieder in Bewegung gesetzt hat. Dies kann ein Indikator für eine Beendigung des Parkvorgangs sein.

In **Fig. 4** ist im Folgenden noch ein Verfahren 400 zum Zuordnen eines Fahrzeugs zu einer Infrastruktur gezeigt. Das Verfahren 400 umfasst ein Empfangen 402 von Bewegungsinformationen von dem Fahrzeug. Die Bewegungsinformationen umfassen Informationen über eine Bewegung des Fahrzeugs. Ferner umfasst das Verfahren 400 ein Empfangen 404 von Messwerten zumindest eines der Infrastruktur zugeordneten Sensors. Das Verfahren 400 umfasst weiterhin ein Vergleichen 406 der Bewegungsinformationen mit den Messwerten.

Das Verfahren 400 kann durch das Vergleichen 406 der Bewegungsinformationen mit den Messwerten eine automatische Zuordnung des Fahrzeugs zu einer Infrastruktur ermöglichen.

Bei der Infrastruktur handelt es sich um um einen Parkplatz (siehe oben) .

Das Vergleichen 406 der Bewegungsinformationen mit den Messwerten kann es erlauben, die Bewegungsinformationen mit den Messwerten zu korrelieren. Dies kann nach den oben beschriebenen Grundsätzen erfolgen Das Verfahren 400 kann beispielsweise ein Feststellen, dass das Fahrzeug eine Infrastruktur nutzt oder belegt, umfassen, wenn die Messwerte gemäß einem vorgegebenen Kriterium den Bewegungsinformationen entsprechen.

Die Messwerte des zumindest einen der Infrastruktur zugeordneten Sensors können über ein LPWAN übertragen werden. Beispielsweise können die Messwerte gemäß dem LTE-MTC Standard des 3rd Generation Partnership Project, dem NB-IoT Standard des 3rd Generation Partnership Project, dem LoRA Standard der LoRa Alliance oder dem SIGFOX Standard der Firma SIGFOX durch den Sensor ausgesendet werden. Derart können die Messwerte des Sensors bei geringem Energieverbrauch über große Reichweiten übertragen werden.

Die Bewegungsinformationen können dabei eine oder mehrere der in Zusammenhang mit Verfahren 100 diskutierten Bewegungsinformationen umfassen.

Das Verfahren 400 kann beispielsweise auf einer Datenverarbeitungsanlage (Back-End) wie einem Server, einem Rechenzentrum oder einer Computer-Cloud ablaufen. Die Daten von dem Fahrzeug können z.B. über ein Mobilfunknetz (d.h. ein zellulares Netzwerk) oder eine sonstige Funktechnologie (z.B. drahtloses lokales Netzwerk) empfangen werden.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird. Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen ASIC, einen IC, ein SOC oder ein FPGA gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist. Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren (100) zum Zuordnen eines Fahrzeugs zu einem Parkplatz, umfassend:
Empfangen (102) von Bewegungsinformationen von dem Fahrzeug durch eine Datenverarbeitungsanlage, wobei die Bewegungsinformationen Informationen über eine Bewegung des Fahrzeugs umfassen;
Empfangen (104) von Messwerten zumindest eines Magnetfeldsensors durch die Datenverarbeitungsanlage, wobei der Magnetfeldsensor in einen Bodenbelag des Parkplatzes eingelassen oder auf dem Bodenbelag des Parkplatzes angeordnet ist, und wobei die Messwerte absolute Werte oder relative Veränderungen des von dem Magnetfeldsensor gemessenen Erdmagnetfelds wiedergeben;
Vergleichen (106) der Bewegungsinformationen mit den Messwerten durch die Datenverarbeitungsanlage; und
Feststellen, dass das Fahrzeug auf dem Parkplatz abgestellt ist, durch die Datenverarbeitungsanlage, wenn die Bewegungsinformationen anzeigen, dass sich das Fahrzeug über den Magnetfeldsensor bewegt hat und nun steht, und die Messwerte des Magnetfeldsensors eine für das Überfahren des Magnetfeldsensors charakteristische Änderung des gemessenen Erdmagnetfelds anzeigen.

2. Verfahren nach Anspruch 1, ferner umfassend:
Senden einer ersten Nachricht an das Fahrzeug, wobei die erste Nachricht Informationen über eine Identität des Parkplatzes sowie die Feststellung, dass das Fahrzeug auf dem Parkplatz abgestellt ist, umfasst.

3. Verfahren nach Anspruch 2, ferner umfassend:
Empfangen einer zweiten Nachricht von dem Fahrzeug, wobei die zweite Nachricht Informationen über ein gewünschtes Parken des Fahrzeugs auf dem Parkplatz umfasst.

4. Verfahren nach Anspruch 3, ferner umfassend:
Empfangen von weiteren Bewegungsinformationen von dem Fahrzeug, wobei die weiteren Bewegungsinformationen Informationen über eine erneute Bewegung des Fahrzeugs umfassen; und
Feststellen, dass das Parken des Fahrzeugs auf dem Parkplatz beendet ist, basierend auf den weiteren Bewegungsinformationen.

5. Verfahren nach Anspruch 3, ferner umfassend:
Senden einer dritten Nachricht an eine Kommunikationsvorrichtung eines Benutzers des Fahrzeugs, wobei die dritte Nachricht Informationen über ein bevorstehendes Ablaufen der gewählten Parkdauer umfasst.

6. Verfahren nach einem der vorhergehenden Ansprüche, ferner umfassend:
Feststellen, dass das Fahrzeug unberechtigt auf dem Parkplatz abgestellt ist; und
Senden einer vierten Nachricht an eine Kommunikationsvorrichtung eines Verantwortlichen für den Parkplatz, wobei die dritte Nachricht Informationen über den Parkplatz sowie das unberechtigte Abstellen des Fahrzeugs auf dem Parkplatz umfasst.

7. Verfahren nach einem der vorhergehenden Ansprüche, wobei die Bewegungsinformationen Informationen über eine Identität, eine Position und eine Geschwindigkeit des Fahrzeugs umfassen.

8. Verfahren nach einem der vorhergehenden Ansprüche, ferner umfassend:
Empfangen von Messwerten eines weiteren dem Parkplatz zugeordneten Sensors;
Vergleichen der Bewegungsinformationen mit den Messwerten des weiteren dem Parkplatz zugeordneten Sensors.

9. Verfahren nach einem der vorhergehenden Ansprüche, wobei die Messwerte gemäß dem LTE-MTC Standard des 3rd Generation Partnership Project, dem NB-IoT Standard des 3rd Generation Partnership Project, dem LoRA Standard der LoRa Alliance oder dem SIGFOX Standard der Firma SIGFOX durch den Sensor ausgesendet werden.

10. Datenverarbeitungsanlage (200) zum Zuordnen eines Fahrzeugs (240) zu einem Parkplatz, umfassend:
eine Empfangsschaltung (210), die eingerichtet ist, Bewegungsinformationen (201) von dem Fahrzeug (240) zu empfangen, wobei die Bewegungsinformationen (201) Informationen über eine Bewegung des Fahrzeugs (240) umfassen,
wobei die Empfangsschaltung (210) ferner eingerichtet ist, Messwerte (202) zumindest eines Magnetfeldsensors zu empfangen, wobei der Magnetfeldsensor in einen Bodenbelag des Parkplatzes eingelassen oder auf dem Bodenbelag des Parkplatzes angeordnet ist, und wobei die Messwerte absolute Werte oder relative Veränderungen des von dem Magnetfeldsensor gemessenen Erdmagnetfelds wiedergeben; und
eine Auswerteschaltung (220), die eingerichtet ist, die Bewegungsinformationen (201) mit den Messwerten (202) zu vergleichen, wobei die Auswerteschaltung (220) ferner eingerichtet ist, festzustellen, dass das Fahrzeug (240) auf dem Parkplatz abgestellt ist, wenn die Bewegungsinformationen anzeigen, dass sich das Fahrzeug über den Magnetfeldsensor bewegt hat und nun steht, und die Messwerte des Magnetfeldsensors eine für das Überfahren des Magnetfeldsensors charakteristische Änderung des gemessenen Erdmagnetfelds anzeigen.

11. Fahrzeug (300), umfassend:
eine Sendevorrichtung (310), die eingerichtet ist, Bewegungsinformationen (301) des Fahrzeugs an eine Datenverarbeitungsanlage (330) zu senden, wobei die Bewegungsinformationen (301) Informationen über eine Bewegung des Fahrzeugs umfassen; und
eine Empfangsvorrichtung (320), die eingerichtet ist, eine erste Nachricht (302) von der Datenverarbeitungsanlage (330) zu empfangen, wobei die erste Nachricht (301) Informationen über eine Identität eines Parkplatzes sowie Informationen über die Feststellung, dass das Fahrzeug auf dem Parkplatz abgestellt ist, umfasst, wobei die Feststellung erfolgt, wenn die Bewegungsinformationen (301) anzeigen, dass sich das Fahrzeug über einen Magnetfeldsensor, der in einen Bodenbelag des Parkplatzes eingelassen oder auf dem Bodenbelag des Parkplatzes angeordnet ist, bewegt hat und nun steht, und Messwerte des Magnetfeldsensors eine für das Überfahren des Magnetfeldsensors charakteristische Änderung des von dem Magnetfeldsensor gemessenen Erdmagnetfelds anzeigen.

12. Fahrzeug nach Anspruch 11, wobei die Bewegungsinformationen (301) Informationen über eine Identität, eine Position und eine Geschwindigkeit des Fahrzeugs umfassen.

13. Programm mit einem Programmcode zum Durchführen des Verfahrens gemäß einem der Ansprüche 1 bis 9, wenn der Programmcode auf einem Computer, einem Prozessor oder einer programmierbaren Hardwarekomponente ausgeführt wird.

## Claims

1. A method (100) for assigning a vehicle to a parking space, comprising:
receiving (102), by a data processing system, movement information from the vehicle, the movement information comprising information on a movement of the vehicle;
receiving (104), by the data processing system, measurement values of at least one magnetic field sensor, wherein the magnetic field sensor is embedded in a floor covering of the parking space or disposed on the floor covering of the parking space, and wherein the measurement values reflect absolute values or relative changes in the earth's magnetic field measured by the magnetic field sensor;
comparing (106), by the data processing system, the movement information with the measurement values; and
determining, by the data processing system, that the vehicle is parked on the parking space when the movement information indicates that the vehicle has moved over the magnetic field sensor and is now stationary, and the measured values of the magnetic field sensor indicate a change in the measured earth's magnetic field characteristic of passing over the magnetic field sensor.

2. The method of claim 1, further comprising:
sending a first message to the vehicle, the first message comprising information on an identity of the parking space, and the determination that the vehicle is parked on the parking space.

3. The method of claim 2, further comprising:
receiving a second message from the vehicle, the second message comprising information on a desired parking of the vehicle on the parking space.

4. The method of claim 3, further comprising:
receiving further movement information from the vehicle, the further movement information comprising information on a new movement of the vehicle; and
determining that the parking of the vehicle on the parking space is finished, based on the further movement information.

5. The method of claim 3, further comprising:
sending a third message to a communication device of a user of the vehicle, the third message comprising information on an upcoming expiration of the selected parking period.

6. The method of any of the preceding claims, further comprising:
determining that the vehicle is parked on the parking space without authorization; and
sending a fourth message to a communication device of a person responsible for the parking space, the third message comprising information on the parking space, and the unauthorized parking of the vehicle on the parking space.

7. The method of any of the preceding claims, wherein the movement information comprises information on an identity, a position, and a speed of the vehicle.

8. The method of any of the preceding claims, further comprising:
receiving measurement values of a further sensor assigned to the parking space;
comparing the movement information with the measurement values of the further sensor assigned to the parking space.

9. The method of to any of the preceding claims, wherein the measurement values are sent out by the sensor according to the LTE-MTC standard of the 3rd Generation Partnership Project, the NB-IoT standard of the 3rd Generation Partnership Project, the LoRA standard of the LoRa Alliance or the SIGFOX standard of the company SIGFOX.

10. A data processing system (200) for assigning a vehicle (240) to a parking space, comprising:
a receive circuit (210) configured to receive movement information (201) from the vehicle (240), the movement information (201) comprising information on a movement of the vehicle (240),
wherein the receive circuit (210) is further configured to receive measurement values (202) of at least one magnetic field sensor, wherein the magnetic field sensor is embedded in a floor covering of the parking space or disposed on the floor covering of the parking space, and wherein the measurement values reflect absolute values or relative changes in the earth's magnetic field measured by the magnetic field sensor; and
an evaluation circuit (220) configured to compare the movement information (201) with the measurement values (202), wherein the evaluation circuit (220) is further configured to determine that the vehicle (240) is parked on the parking space when the movement information indicates that the vehicle has moved over the magnetic field sensor and is now stationary, and the measurement values of the magnetic field sensor indicate a change in the measured earth's magnetic field characteristic of passing over the magnetic field sensor.

11. A vehicle (300), comprising:
a sending device (310) configured to send movement information (301) of the vehicle to a data processing system (330), the movement information (301) comprising information on a movement of the vehicle; and
a receiving device (320) configured to receive a first message (302) from the data processing system (330), the first message (301) comprising information on an identity of a parking space and information on the determination that the vehicle is parked on the parking space, the determination being made when the movement information (301) indicates that the vehicle has moved over a magnetic field sensor embedded in a floor covering of the parking space or disposed on the floor covering of the parking space and is now stationary, and measurement values of the magnetic field sensor indicate a change in the earth's magnetic field measured by the magnetic field sensor characteristic of passing over the magnetic field sensor.

12. The vehicle of claim 11, wherein the movement information (301) comprises information on an identity, a position, and a speed of the vehicle.

13. A program having a program code for performing the method of any one of claims 1 to 9 when the program code is executed on a computer, a processor, or a programmable hardware component.

## Revendications

1. Procédé (100) pour associer un véhicule à une place de parking, comprenant le fait de :
recevoir (102), par un système de traitement de données, des informations de mouvement du véhicule, les informations de mouvement comprenant des informations sur un mouvement du véhicule ;
recevoir (104), par le système de traitement de données, des valeurs mesurées d'au moins un capteur de champ magnétique, le capteur de champ magnétique étant enchâssé dans un revêtement de sol de la place de parking ou étant disposé sur le revêtement de sol de la place de parking, et les valeurs mesurées reflétant des valeurs absolues ou des changements relatifs du champ magnétique terrestre mesuré par le capteur de champ magnétique;
comparer (106), par le système de traitement de données, les informations de mouvement avec les valeurs mesurées ; et
déterminer, par le système de traitement de données, que le véhicule est garé sur la place de parking lorsque les informations de mouvement indiquent que le véhicule s'est déplacé au-dessus du capteur de champ magnétique et est maintenant arrêté, et les valeurs mesurées du capteur de champ magnétique indiquent un changement du champ magnétique terrestre mesuré caractéristique du passage au-dessus du capteur de champ magnétique.

2. Procédé selon la revendication 1, comprenant en outre le fait de :
envoyer un premier message au véhicule, le premier message comprenant des informations sur une identité de la place de parking et la détermination que le véhicule est garé sur la place de parking.

3. Procédé selon la revendication 2, comprenant en outre le fait de :
recevoir un second message du véhicule, le second message comprenant des informations sur un stationnement souhaité du véhicule sur la place de parking.

4. Procédé selon la revendication 3, comprenant en outre le fait de :
recevoir d'autres informations de mouvement du véhicule, les autres informations de mouvement comprenant des informations sur un nouveau mouvement du véhicule ; et
déterminer que le stationnement du véhicule sur la place de parking est terminé, sur la base des autres informations de mouvement.

5. Procédé selon la revendication 3, comprenant en outre le fait de :
envoyer un troisième message à un dispositif de communication d'un utilisateur du véhicule, le troisième message comprenant des informations sur une expiration imminente de la période de stationnement sélectionnée.

6. Procédé selon l'une des revendications précédentes, comprenant en outre le fait de :
déterminer que le véhicule est garé sur la place de parking sans autorisation ; et
envoyer un quatrième message à un dispositif de communication d'une personne responsable du parking, le troisième message comprenant des informations sur la place de parking et le stationnement non autorisé du véhicule sur la place de parking.

7. Procédé selon l'une des revendications précédentes, les informations de mouvement comprenant des informations sur une identité, une position et une vitesse du véhicule.

8. Procédé selon l'une des revendications précédentes, comprenant en outre le fait de :
recevoir des valeurs mesurées d'un autre capteur associé à la place de parking ;
comparer les informations de mouvement avec les valeurs mesurées de l'autre capteur associé à la place de parking.

9. Procédé selon l'une des revendications précédentes, les valeurs mesurées étant émises par le capteur selon la norme LTE-MTC du 3rd Generation Partnership Project, la norme NB-IoT du 3rd Generation Partnership Project, la norme LoRA de la LoRa Alliance ou la norme SIGFOX de la société SIGFOX.

10. Système de traitement de données (200) pour associer un véhicule (240) à une place de parking, comprenant :
un circuit de réception (210) configuré pour recevoir des informations de mouvement (201) du véhicule (240), les informations de mouvement (201) comprenant des informations sur un mouvement du véhicule (240),
le circuit de réception (210) étant en outre configuré pour recevoir des valeurs mesurées (202) d'au moins un capteur de champ magnétique, le capteur de champ magnétique étant enchâssé dans un revêtement de sol de la place de parking ou étant disposé sur le revêtement de sol de la place de parking, et les valeurs mesurées reflétant des valeurs absolues ou des changements relatifs du champ magnétique terrestre mesuré par le capteur de champ magnétique; et
un circuit d'évaluation (220) configuré pour comparer les informations de mouvement (201) avec les valeurs mesurées (202), le circuit d'évaluation (220) étant en outre configuré pour déterminer que le véhicule (240) est garé sur la place de parking lorsque les informations de mouvement indiquent que le véhicule s'est déplacé au-dessus du capteur de champ magnétique et est maintenant arrêté, et les valeurs mesurées du capteur de champ magnétique indiquent un changement du champ magnétique terrestre mesuré caractéristique du passage au-dessus du capteur de champ magnétique.

11. Véhicule (300) comprenant :
un dispositif de transmission (310) configuré pour transmettre des informations de mouvement (301) du véhicule à un système de traitement de données (330), les informations de mouvement (301) comprenant des informations sur un mouvement du véhicule ; et
un dispositif de réception (320) configuré pour recevoir un premier message (302) du système de traitement de données (330), le premier message (301) comprenant des informations sur une identité d'une place de parking et des informations sur la détermination que le véhicule est garé sur la place de parking, la détermination étant faite lorsque les informations de mouvement (301) indiquent que le véhicule s'est déplacé au-dessus d'un capteur de champ magnétique enchâssé dans un revêtement de sol de la place de parking ou disposé sur le revêtement de sol de la place de parking et est maintenant arrêté, et les valeurs mesurées du capteur de champ magnétique indiquent un changement du champ magnétique terrestre mesuré par le capteur de champ magnétique caractéristique du passage au-dessus du capteur de champ magnétique.

12. Véhicule selon la revendication 11, les informations de mouvement (301) comprenant des informations sur une identité, une position et une vitesse du véhicule.

13. Programme présentant un code de programme pour réaliser le procédé selon l'une des revendications 1 à 9 lorsque le code de programme est exécuté sur un ordinateur, un processeur ou un composant matériel programmable.
